# EUROPEAN PATENT APPLICATION

(11) **EP 1 953 947 A1**
(43) Date of publication of application: **06.08.2008**
(21) Application number: 07002133.2
(22) Date of filing: 31.01.2007
(51) Int. Cl.: H04L 5/02, H04L 27/26, H04L 25/03, H04L 1/00

(54) **Method for operating a mobile telecommunication network using orthogonal frequency division multiplex with tone reservation in a communication path**

(71) Applicant: Nokia Siemens Networks GmbH & Co. KG, 81541 München (DE)
(72) Inventor: Dörpinghaus, Meik, 52074 Aachen (DE); Färber, Michael, 82515 Wolfratshausen (DE); Jordan, Markus, 45357 Essen (DE); Senst, Martin, 47443 Moers (DE)

(57) **Abstract**

The invention relates to a method for operating a mobile telecommunication network (10) using orthogonal frequency division multiplex (OFDM) with tone reservation in a communication path, especially in an uplink, between at least one mobile station (11-1,11-2,11-3,11-4,11-5) of a plurality of mobile stations and a network component (12). A first message is thereby transmitted from the network component (12) to the at least one mobile station (11-1,11-2,11-3,11-4,11-5) camping on a cell (13), the first message signalling whether or not tone reservation can be used within the cell (13). Furthermore, in case tone reservation can be used, a second message is transmitted from the network component (12) to the at least one mobile station (11-1,11-2,11-3,11-4,11-5) in the cell (13) providing information about the intended use of reserved tones.

## Description

The invention relates to a method for operating a mobile telecommunication network using orthogonal frequency division multiplex (OFDM) with tone reservation in a communication path, especially in an uplink, between at least one mobile station of a plurality of mobile stations and a network component. The invention relates further to a mobile telecommunication network and a mobile station being used in a mobile telecommunication network.

OFDM(A) system concepts have a certain disadvantage in using OFDM(A) in the uplink path (uplink). The OFDM(A) based uplink suffers from imperfect terminal station synchronisation, hence misalignment of terminal signals at the base station receiver resulting in a reduced SIR. Typical examples for OFDM(A) based uplink system concepts are the IEEE 802.16 standard (WiMax), 802.11g, or proprietary concepts like Flash-OFDM. The OFDM modulation itself puts a significant requirement on the power amplifier design, namely in form of a back off, which reduces the efficiency of a power amplifier of a mobile station or achievable output power.

Peak to average power ratio (PAPR) is a measure which describes the required linearity of a transmitter to transmit signals with multi-code or multi-tone characteristic. PAPR is dependent on the used modulation schemes. The aim is to generate a signal without significant distortion, therefore avoiding degradations in the SINR required at the receiver. Therefore, the PAPR describes the needed linearity especially of the power amplifier (of a mobile station) to achieve a good link performance. The linearity is achieved by introducing a back off from the power amplifier saturation point, commonly known as the 1 dB compression point, about a certain amount of dB. The magnitude of this back off depends on the used modulation scheme and the multi-code or multi tone characteristic of the system concept. The back off improves the linearity of the power amplifier at the cost of higher power consumption, or a reduced maximum TX power.

From a mobile station point of view, large power back offs are reducing the achievable range or, if the range is maintained, the power amplifier linearity causes high power consumption and shorten the battery life time significantly. This effect on increased transmitter design complexity and power demand mounts up in systems which are utilizing balanced Multiple Input Multiple Output (MIMO) concepts as e.g. 2X2 MIMO, which requires the presence of two transmitters in the terminal. Complex transmitter designs and high battery consumption are duplicated.

Systems with OFDMA multi carrier transmission are suffering on the PAPR effects in the uplink. Especially if mobile terminals are being used, the effect on the battery life time is negative. There are concepts to reduce the required power back off by means of tone reservation.

Tone reservation dedicates specific subcarriers to be used for something different than the user data transport. Usually, the user data is mapped to a number of subcarriers and is segmented into time intervals, comprising resource block units. Tone reservation is performed in such a way that additional subcarriers are added to the resource block (or subcarriers of a resource block are being removed from the MAC as carriers bearing user data and getting a reserved status), where the reserved tones have a modulation which does not depend on user data. The modulation is controlled by the output signal and if the peak power is going to exceed a certain threshold, the modulation of the reserved tones is chosen in such a manner that the PAPR composed by all tones is decreased. Depending on the implemented complexity, PAPR reductions of about 3 dB and higher can be achieved (see Tellado, J. "Peak to Average Power Reduction for Multicarrier Modulation", PhD Dissertation, Stanford University, 2000), which in terms of battery consumption and achievable range is a big step. The associated disadvantage is that the spectral efficiency is lowered because of the reservation of subcarriers with the only purpose of PAPR reduction. Furthermore, the utilisation of the amplifier closer to the saturation maintains the level of spectral spill over, and the PAPR reduction does not allow a tighter spectral mask. The mask can be maintained, but with the difference that a higher output power can be achieved compared to conventional terminals.

In operational scenarios, where range is the crucial issue and not the capacity, the spectral efficiency loss by tone reservation and necessary guard bands due to the power amplifier non-linearity caused spectral growth, is secondary. The primary objective is to reduce the PAPR and to enable higher sustained PA output power, not improving the spectral mask.

Another operational scenario is the high capacity scenario, where the range requirements are short, but the spectrum efficiency shall be optimal. OFDMA in the uplink shows here some system inherent effects. The OFDMA signal at the BTS receiver is compiled by a multitude of OFDM signals from various mobile stations. The mobile stations have an imperfect synchronisation. Even though they derive their time base from network, delay times, signal jitter, and the limitations of the local oscillators add an error to the signal. These errors of the individual OFDM signals are causing an imperfect demodulation in the BTS receiver, because the signal of adjacent subcarriers would not be perceived as zero at the detector, and a power spill from the adjacent subcarrier is reducing the SINR performance. This effect is getting more critical when the terminals have different positions in the cell, and the powers of different OFDM signals seen at the receiver have significant power differences. In such case the power spill over may mask wanted signals.

A known method to combat these effects is also a tone reservation (see Brandes, S., Cosovic, I., Schnell, M., "Sidelobe Suppression in OFDM Systems by Insertion of Cancellation Carriers"; VTC Fall 2005). However, the modulation of the reserved subcarriers is performed in such a manner that the spectral mask gets steeper and the power spill over into adjacent resource blocks is reduced by up to 20 dB. The procedure can be feedback based: using the input data, the resulting output spectrum is processed to derive the parameters for the modulation of the reserved tones.

An alternative implementation is a statistical approach producing modulation patterns which are reducing the constructive addition of the tones. The associated disadvantage of this method is an increase of the PAPR. However, as long the range is not a point, and spectral efficiency and protection of adjacent bands and resource bocks is the objective the method is very successful.

It therefore is an object of the present invention to provide an enhanced method for operating a mobile telecommunication network using orthogonal frequency division multiplex (OFDM) with tone reservation in a communication path, especially in an uplink. It is a further object of the invention to provide a mobile telecommunication network being capable of implementing the method according to the invention. It is a further object of the invention to provide a mobile station which can be used in a telecommunication network according to the invention.

These objects are solved by the independent claims. Preferred embodiments are described in respective dependent claims.

According to the invention, a method for operating a mobile telecommunication network using orthogonal frequency division multiplex (OFDM) with tone reservation in a communication path, especially in an uplink, between at least one mobile station of a plurality of mobile stations and a network component comprises the following steps: a first message is transmitted from the network component to the at least one mobile station camping on a cell, the first message signalling whether or not tone reservation can be used within the cell. In case tone reservation can be used, a second message is transmitted from the network component to the at least one mobile station in the cell providing information about the intended use of reserved tones.

A mobile telecommunication network according to the invention comprises the following features: a network component for exchanging data with at least one mobile station camping on a cell by using orthogonal frequency division multiplex (OFDM) with tone reservation in a respective communication path, especially in an uplink; the network component is capable of transmitting a first message to the at least one mobile station signalling whether or not tone reservation can be used within the cell. The network component further is capable of transmitting a second message to the at least one mobile station providing information about the intended use of reserved tones, in case tone reservation can be used.

A mobile station according to the invention may be used in a mobile telecommunication network. The mobile station is capable of exchanging data with a network component by using orthogonal frequency division multiplex (OFDM) with tone reservation in a communication path. Dependent from information about the intended use of reserved tones provided by a network component of the network, the mobile station is capable of using tone reservation in the uplink communication path for side band reduction in case an optimised spectrum efficiency shall be achieved, and using PAPR (Peak to Average Power Ratio) reduction in the uplink communication path in case high sustained output power of a power amplifier of the mobile station is required.

Instead of a predefined use of the reserved tones in an OFDM mobile telecommunication system as stated in the prior art, the invention suggests to introduce a generic tone reservation in a telecommunication system with OFDM and especially OFDM(A) based uplink. The introduction of the tone reservation as a generic property of the telecommunication network and the downlink signalling from the network component to at least one mobile station or terminal in a cell allows a more flexible and efficient operation of the telecommunication network. To get all of the advantages of the flexibility, the network controls the use of reserved tones by the at least one mobile station and provides information about the intended use of reserved tones.

According to a preferred embodiment of the invention, the information within the second message indicates a mobile station to use tone reservation in the uplink communication path for side band reduction in case optimised spectrum efficiency shall be achieved. In a further preferred embodiment, the information indicates a mobile station to use PAPR (Peak to Average Power Ratio) reduction in the uplink communication path in case high sustained output power of a power amplifier of the mobile station is required. In case of a limited range of a mobile station within the cell of the telecommunication network, the network will choose the option of the PAPR reduction to improve the performance of the power amplifier of the mobile stations. In cases where the capacity of the mobile stations is the crucial issue, the network will indicate the mobile stations within the cell of the network to use the reserved tones for side band reduction. Therefore, a cell specific customisation on the operational scenario (capacity driven small cells or range limited large cells) can be done. By the generalization of the tones and the network controlled application of the reserved tones to adverse effects can be generated, each one serving exclusively for a specific operational scenario.

In a further embodiment, the mobile stations which might have different capabilities and release versions signal their technical capabilities by means of a class mark to a radio resource management instance or component of the telecommunication network. Such capability information is valuable, where mobile stations supporting reserved tones and mobile stations without the capability of supporting reserved tones are located in the same cell.

According to a further embodiment, the radio resource management instance or component evaluates the class marks received by the mobile stations for grouping the respective mobile stations to specific radio resources and/or for identifying capability classes which are using tone reservation. The evaluation can be done for the sake of optimisation. The knowledge about the capabilities and releases of the mobile stations further allows identifying capability classes which are using tone reservation, but only for specific solutions. If such terminals are present, this can be considered in scheduling and channel coding, and they will be treated as terminals without tone reservation capability in the serving cell, at least from the perspective of the intended tone reservation effect within the cell. In a cell with the objective to use the tone reservation for side band reduction, mobile stations which can use the tones only for PAPR reduction are treated like terminals without any tone reservation capability and get allocated to resource unit allocations with larger guard bands. This preferred embodiment allows for consideration of scenarios in which mobile stations only are able to support one of the above-mentioned objects. This means, the mobile stations can use tone reservation, but depending on their implementation they can only achieve a single improvement be it PAPR reduction or side band reduction. In such scenarios, the mobile station transmits a message to the network component informing it about its capability. If, for example, side band reduction is supported but not PAPR reduction, the telecommunication network (respectively a scheduler, an MAC layer, and a channel coder) can consider this situation.

In a further embodiment of the invention, the radio resource management instance or component discards reserved tones received by those mobile stations which use reserved tones. This option is possible because of the knowledge about the usage of a mobile station regarding reserved tones. Thus, a base station of the telecommunication network is able to reduce the receiver bandwidth in the base band.

Furthermore, it is suggested that the mobile station transmits information about its distance to the network component. This is helpful for providing efficient use of tone reservation capability. For example in range limited cells, a mobile station may be close to a base station and has therefore no need to operate with maximum power. This allows to disable the tone reservation for PAPR reduction and to use the tones instead for user data, i.e. improving the user data throughput. Furthermore, the spectrum of the terminal transmitter will have less spectral grove and less impact on adjacent resource blocks.

According to a further embodiment of the invention, the first and second message are broadcasted to all mobile stations camping on the cell thereby creating a common use of the reserved tones within the cell.

As an alternative, the first and second message is dedicated to one or some of the mobile stations in the cell. This allows a specific optimised use of reserved tones dependent on link quality, capacity needs and terminal position. Therefore, an individual signalling between the network component and dedicated mobile stations within a cell a specific optimised use of reserved tones dependent on the link quality can be achieved. In a link individual signalling of reserved tones, a link adaptation can be introduced changing the use of the tones, depending on the link quality, capacity needs and station positions. This embodiment can be implemented as a decision using tones for the one or the other purpose. By using optionally more information in the signalling a finer granularity of a trade off can be achieved.

In such an operational case described, the network will be able to allow tone reservation to be used for PAPR reduction for the terminals at the cell border and the spectrum shaping for mobile stations which are located close to the base station. It is of advantage that a scheduler of the network is aware of this use for allocating the mobile stations in spectrum segments with more or less guard band allocations.

In a further embodiment of the invention, the information indicating a mobile station to use tone reservation in the uplink communication path for side band reduction is transmitted to mobile stations within a first area of the cell which is close to the network component. As an alternative, the information indicating a mobile station to use tone reservation in the uplink communication path to support PAPR reduction is transmitted to mobile stations within a second area of the cell which is adjacent to a cell border of the network component.

Another advantageous feature applicable to mobile stations which are able to optimise both side band spectrum and PAPR reduction by means of reserved tones is to apply a combination of these effects. This will result in a trade off in the achievable PAPR reduction and the side band reduction. This allows a further optimisation in a view of a link adaptation which results in a finer granular algorithm in optimizing the side band reduction in relation with the PAPR gain (which means reducing the achievable power of the power amplifier of the mobile station). As closer a terminal is to the base station of the network, the reduced power amplifier output power needs can be utilized for improved side band reduction.

As an option, the trade off factor is signalled from the network component to the mobile stations, wherein those mobile stations being able to support PAPR and side band reduction by using reserved tones convert the trade off factor in a trade off of the use of reserved tones in the resulting effects of PAPR and side band.

In an alternative, these mobile stations which are able to support PAPR reduction and side band reduction by using reserved tones, adapt side band reduction to the actual power needs in the cell for reducing the interference in the mobile telecommunication network. Preferably, the mobile station signals the actual trade off factor to the network component for improving the spectral efficiency by optimizing allocation of resource blocks in regard to actual guard band needs. After reporting the actual trade off factor in a standardized manner from the mobile station to the network component, a network scheduler can fully optimise this effect in the frequency domain scheduling. Even if this reporting would not be utilized, the side band reduction will provide a benefit in reduced adjacent resource block interference.

The invention further comprises a computer program product which is directly loadable into the internal memory of a digital computer, comprising software portions for performing the steps of the method described when said product is run on a computer.

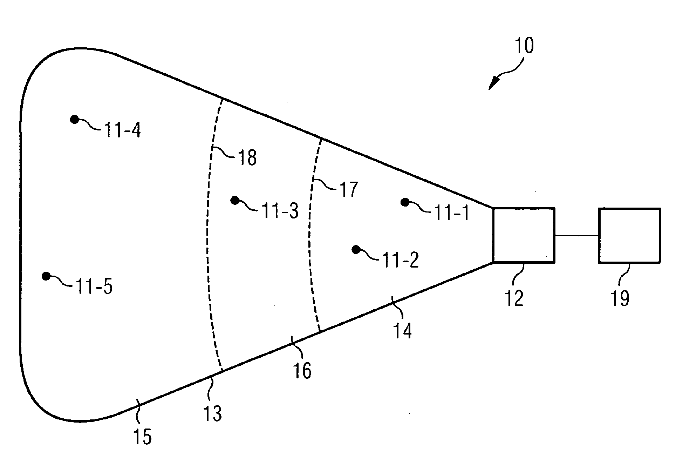

The invention will further be explained with reference to the accompanying drawing. The figure shows a schematic view of a detail of a mobile telecommunication network. The telecommunication network is depicted with reference numeral 10. A network component 12, which may represent a base station of the telecommunication network 10, covers a communication area which is depicted with reference numeral 13 and called a cell. Within this cell 13, a plurality of mobile stations 11-1,11-2,11-3,11-4,11-5 are located. The mobile stations 11-1,11-2 are located within a first area 14 which is close to the network component 12. The mobile stations 11-4,11-5 are camping on a second area 15 which is adjacent to a cell boarder and distant from the network component 12. The mobile station 11-3 is located within a third area 16 which is inbetween the first and second areas 14, 15. A boarder between the first area 14 and the third area 16 is depicted as 17. A boarded between the third area 16 and the second area 15 is depicted with reference numeral 18.

It is assumed that at least one of the mobile stations 11-1, ..., 11-5 is able to support tone reservation for PAPR reduction and/or side band reduction. It is further assumed that the network component 12 is able to use OFDM(A) with tone reservation.

To avoid that each of the mobile stations 11-1, ...,11-5 use the reserved tones on the basis of their decision, the telecommunication network 10 introduces the tone reservation as a generic property. Therefore, a downlink signalling is executed from the network component 12 to the mobile stations 11-1, ...,11-5 which are located within the cell 13. Thereby, it is signalled whether or not tone reservation can be used within the cell. Furthermore, in case tone reservation can be used, a further message is transmitted from the network component 12 to the mobile stations 11-1, ...,11-5 in the cell providing information about the intended use of reserved tones. The information indicates a mobile station to use tone reservation in the uplink communication path for side band reduction in case an optimised spectrum efficiency shall be achieved. Alternatively, the information indicates a mobile station to use PAPR reduction in the uplink communication path in case high sustained output power of a power amplifier of a mobile station is required.

The information about the use of the reserved tones may be broadcasted by the network component 12, thereby creating a common use of the reserved tones within the cell 13. Alternatively, an individual signalling between the network component 12 and dedicated mobile stations within the cell 13 can be done. This allows specific use of reserved tones dependent on the link quality between a respective mobile station 11-1, ..., 11-5 and the network component 12. When using the option of individual signalling, the intended use of the reserved tones, a link adaptation can be introduced changing the use of the tones, depending on the link quality, capacity needs and the position of a respective mobile station within the cell 13. In this operational case, the network component 12 has the ability to allow the tone reservation to be used for PAPR reduction for those mobile terminals at the cell border (in the example mobile stations 11-4,11-5) and the spectrum shaping for terminals close to the base station (in the example mobile stations 11-1,11-2). It is advantageous, if a scheduler of the network 10 is aware of this use and allocates the mobile stations in spectrum segments with more or less guard band allocations.

For example, those mobile stations which are located within the first area 14 of the cell 13 (wherein the first area is bounded by the border 17) will receive the information about using tone reservation for side band reduction. Those mobile stations which are located in the second area 15 (which is bounded by the border 18) will receive the information from the network component 12 to use the tone reservation for PAPR reduction. Those terminals in the third area 16 (which is inbetween the borders 17 and 18) could receive the information about not to use tone reservation. It is to be understood that this is only an example. In general, the cell 13 could be separated into another amount of areas different from the number of three depending on the goals to be achieved from the sight of the network.

For optimisation of controlling a telecommunication network it is helpful that the mobile stations 11-1, ...,11-5 signal their capabilities by a means of a class mark to the network component 12. Such capability information is valuable when within a cell there are mobile stations supporting reserved tones and mobile stations without a capability to support reserved tones. Based on this information, the telecommunication network, respectively, a radio resource management instance which is depicted with reference numeral 19 and connected to a network component 12, can consider this information and group the mobile stations 11-1, ...,11-5 to specific radio resources. An optimisation of the guard band use is for example possible. The knowledge that a specific mobile station is using reserved tones provides the network component 12 with an a priori knowledge for the base station receiver to discard these tones in the receiver. Thus, the base station is able to reduce the receiver bandwidth in the base band.

A telecommunication network 10 according to the invention covers the scenario that terminals can use tone reservation, but depending on their implementation they can only achieve a single improvement be it PAPR reduction or side band reduction. If the mobile stations 11-1, ...,11-5 inform the network component 12 about their capability a specific optimisation is achievable. If, for example, the side band reduction is supported but not PAPR, the network (respectively the scheduler, an MAC layer, and a channel coder) can consider this situation. First, the mobile station will have less TX power at the cell edge and therefore would need more redundancy in the transmission. Therefore, it is provided only reduced individual user data throughput. On the other hand, if the mobile station can support the PAPR reduction, the channel coding redundancy can be reduced and compensated by more TX power. The scheduler can consider the possible power reserve of PAPR capable terminals in allocating such terminals in less optimal chunks of spectrum, having the knowledge that the higher power can compensate effects of the less optimal channel.

Besides the capability information, it is further helpful, when the mobile stations 11-1, ...,11-5 can indicate the distance to the base station for efficient use of the tone reservation capability. Mobile stations, which may be close to the base station (in the example mobile stations 11-1,11-2), have therefore no need to operate with maximum power. Tone reservation for PAPR reduction can be disabled for these terminals. Instead, the reserved tones can be used for user data, thereby improving the user data throughput. A further advantage is that the spectrum of the terminal transmitter has less spectral growth and less impact on adjacent resource blocks.

It is further possible to optimise both the side band spectrum and the PAPR by means of reserved tones by applying a combination of the two effects. This will result in a trade off in the achievable PAPR reduction and a side band reduction. An optimisation in the view of a link adaptation can be achieved. This allows a finer granular algorithm in optimising the side band reduction in relation with the PAPR gain. As closer a mobile station is located to the base station, the reduced power amplifier output power needs can be utilized for improved side band reduction.

In this case, the mobile station reports an actual used trade off factor in a standardized manner so that the network scheduler can fully optimise this effect in a frequency domain scheduling. Even in the case, if this report will not be utilized, the side band reduction will provide a benefit in reduced adjacent resource block interference.

Alternatively, the optimisation in the view of the link adaptation can be done by signalling a trade off factor from the network component 12 to the mobile stations 11-1, ...,11-5 within the cell. The effect is so much better the more mobile stations are able to support this feature. Further, the improvement is greater when the mobile stations have a similar behaviour converting the signalling information of the trade off factor received by the network component.

The availability of terminal capability information and the knowledge of reserved tones positions in the spectrum allows for optimisations of the receiver bandwidth in the network component. The network component and base station, respectively, has to discard the received reserved tones and can subsequently reduce the receiver bandwidth effectively to the number of the received reserved tones, and can subsequently reduce the receiver bandwidth effectively to the number of tones in a resource block combination bearing user data.

Mobile stations, which have the ability to use the tone reservation for both (PAPR reduction and side band reduction) and utilize an algorithm which permanently can adapt the side band reduction to the actual power needs, can reduce the interference in the telecommunication network. If the terminal is able to report the actual used trade off to the network component 12 and the network component 12 is able to utilize this information in the radio resource scheduler, further benefits in spectral efficiency can be achieved by optimised allocation of resource blocks in regard to actual guard band needs.

## Claims

1. A method for operating a mobile telecommunication network (10) using orthogonal frequency division multiplex (OFDM) with tone reservation in a communication path, especially in an uplink, between at least one mobile station (11-1,11-2,11-3,11-4,11-5) of a plurality of mobile stations and a network component (12), wherein:
- a first message is transmitted from the network component (12) to the at least one mobile station (11-1,11-2,11-3,11-4,11-5) camping on a cell (13), the first message signalling whether or not tone reservation can be used within the cell (13); and
- in case tone reservation can be used, a second message is transmitted from the network component (12) to the at least one mobile station (11-1,11-2,11-3,11-4,11-5) in the cell (13) providing information about the intended use of reserved tones.

2. The method according to claim 1, wherein the information indicates a mobile station (11-1,11-2,11-3,11-4,11-5) to use tone reservation in the uplink communication path for side band reduction in case an optimised spectrum efficiency shall be achieved.

3. The method according to claim 1, wherein the information indicates a mobile station (11-1,11-2,11-3,11-4,11-5) to use PAPR reduction in the uplink communication path in case high sustained output power of a power amplifier of the mobile station (11-1,11-2,11-3,11-4,11-5) is required.

4. The method according to one of the preceding claims, wherein the mobile stations (11-1,11-2,11-3,11-4,11-5) which might have different capabilities and release versions signal their technical capabilities by means of a class mark to a radio resource management instance or component of the telecommunication network (10).

5. The method according to claim 4, wherein the radio resource management instance or component evaluates the class marks received by the mobile stations (11-1,11-2,11-3,11-4,11-5) for grouping the respective mobile stations (11-1,11-2,11-3,11-4,11-5) to specific radio resources and/or for identifying capability classes which are using tone reservation.

6. The method according to one of the claims 4 or 5, wherein the radio resource management instance or component discards reserved tones received by those mobile stations (11-1,11-2,11-3,11-4,11-5) which use reserved tones.

7. The method according to one of the preceding claims, wherein the mobile station (11-1,11-2,11-3,11-4,11-5) transmits information about its distance to the network component (12).

8. The method according to one of the preceding claims, wherein the first and second message are broadcasted to all mobile stations (11-1,11-2,11-3,11-4,11-5) camping on the cell (13) thereby creating a common use of the reserved tones within the cell (13).

9. The method according to one of the claims 1 to 7, wherein the first and second message is dedicated to one or some of the mobile stations (11-1,11-2,11-3,11-4,11-5) in the cell (13).

10. The method according to claim 9, wherein the information indicating a mobile station (11-1,11-2,11-3,11-4,11-5) to use tone reservation in the uplink communication path for side band reduction is transmitted to mobile stations (11-1,11-2,11-3,11-4,11-5) within a first area (14) of the cell (13) which is close to the network component (12).

11. The method according to claim 9, wherein the information indicating a mobile station (11-1,11-2,11-3,11-4,11-5) to use tone reservation in the uplink communication path to support PAPR reduction is transmitted to mobile stations (11-1,11-2,11-3,11-4,11-5) within a second area (15) of the cell (13) which is adjacent to a cell (13) border of the network component (12).

12. The method according to one of the preceding claims, wherein a trade off factor is signalled from the network component (12) to the mobile stations (11-1,11-2,11-3,11-4,11-5)s wherein those mobile station (11-1,11-2,11-3,11-4,11-5) being able to support PAPR and side band reduction by using reserved tones convert the trade off factor in a trade off of the use of the reserved tones in the resulting effects of PAPR and side band.

13. The method according to one of the preceding claims, wherein these mobile stations (11-1,11-2,11-3,11-4,11-5) which are able to support PAPR reduction and side band reduction by using reserved tones, adapt side band reduction to the actual power needs in the cell (13) for reducing the interference in the mobile telecommunication network (10).

14. The method according to claim 13, wherein the mobile station (11-1,11-2,11-3,11-4,11-5) signals the actual trade off factor to the network component (12) for improving the spectral efficiency by optimising allocation of resource blocks in regard to actual guard band needs.

15. A mobile telecommunication network (10), comprising:
- a network component (12) for exchanging data with at least one mobile station (11-1,11-2,11-3,11-4,11-5) camping on a cell (13) by using orthogonal frequency division multiplex (OFDM) with tone reservation in a respective communication path, especially in an uplink;
- the network component (12) being capable of transmitting
- a first message to at least one mobile station (11-1,11-2,11-3,11-4,11-5) signalling whether or not tone reservation can be used within the cell (13); and
- a second message to the at least one mobile station (11-1,11-2,11-3,11-4,11-5) providing information about the intended use of reserved tones, in case tone reservation can be used.

16. A mobile station (11-1,11-2,11-3,11-4,11-5) being used in a mobile telecommunication network (10), being capable of:
- exchanging data with a network component (12) by using orthogonal frequency division multiplex (OFDM) with tone reservation in a communication path;
- dependant from information about the intended use of reserved tones provided by a network component (12) of the network,
- using tone reservation in the uplink communication path for side band reduction in case an optimised spectrum efficiency shall be achieved, and
- using PAPR reduction in the uplink communication path in case high sustained output power of a power amplifier of the mobile station (11-1,11-2,11-3,11-4,11-5) is required.

17. A computer program product directly loadable into the internal memory of a digital computer, comprising software code portions for performing the steps of one of the claims 1 to 14 when said product is run on a computer.
